# EUROPEAN PATENT APPLICATION

(11) **EP 4 464 683 A1**
(43) Date of publication of application: **20.11.2024**
(21) Application number: 24175285.6
(22) Date of filing: 10.05.2024
(51) Int. Cl.: C05F 11/08, A01N 63/22, A01N 63/27, C05G 3/60, C05G 3/80, C05G 5/10, C05G 5/30, C09K 17/40, C05G 1/00, A01P 21/00, A01N 25/30, A01N 25/14, A01N 1/00, A01P 1/00, F16D 69/02, C09K 13/00, C09K 3/32, C09K 3/14, C09K 3/00

(54) **SOIL ACTIVATOR**

(30) Priority: 11.05.2023 EP 23172940
(71) Applicant: Earth Alive Clean Technologies Inc., Montréal, Québec H2Z 1S4 (CA)
(72) Inventor: TOUSSAINT, Claudia, Montréal, H2Z 1S4 (CA); NEUFELD, Simon, Montréal, H2Z 1S4 (CA); SAFINA, Gulnaz, Montréal, H2Z 1S4 (CA)
(74) Representative: Calysta NV

(57) **Abstract**

Wettable powder soil activator composition having an extended shelf-life duration comprising from 91.8 to 99.8 weight% of at least one lignosulfonate salt, from 0.2 to 8.2 weight % of a bacterial mixture, said bacterial mixture containing at least 3 different bacteria species with one or more nitrogen fixing bacteria species and one or more phosphorus solubilizing bacteria species, and containing at least 263 million cfu total bacteria/g soil activator composition after said extended shelf life, wherein said lignosulfonate salt is at least one amongst sodium lignosulfonate, calcium lignosulfonate and wherein said extended shelf life is higher than or equal to 2 years.

## Description

The present invention relates to a wettable powder soil activator composition.

Fertilizing the soil aims to prepare it as well as possible for the cultivation of plants. Some soils are naturally more fertile than others. However, even nutrient-rich soils will eventually become depleted if they are intensively cultivated. The use of fertilizers to fertilize the soil improves the growth of the plants and can increase the level of organic matter in the soil. There are different types of fertilizers: organic fertilizers, inorganic fertilizers and biofertilizers.

Organic fertilizers are of animal or plant origin, and sometimes both. Organic waste of animal origin often comes from industrial waste. Examples include ground horn, compost tea, guano, feathers, urea, bone meal, fresh and composted manure and fish meal. Organic waste of plant origin is composted plant waste (by worms or by micro-organisms), algae, compost tea, plant extracts or other decoctions. Organic fertilizers are not immediately available to the plant but must be first transformed by soil micro-organisms.

Inorganic fertilizers are made of substances of mineral origin. Some of them are produced by exploiting natural deposits such as crushed rocks like lava dust, serpentine and basaltic powder. Others are synthesized through chemical reactions. These chemical fertilizers contain the primary nutrients, which are nitrogen (N), phosphorus (P) and potassium (K).

Biofertilizers are microorganism-containing substances that, when added to soil, increase fertility and promote plant growth. The microorganisms have the capacity to enhance plant nutrient uptake by multiplying in the region of soil surrounding plant roots and making the nutrients more easily available to plant root.

Since the action of biofertilizers depends on the viability of the microorganisms they contain, it is important to ensure the stability and the capacity of these microorganisms to form bioavailable nutrients for the plant. The stability of these microorganisms is strongly dependent on the type of biofertilizers, i.e. a liquid biofertilizer or a solid biofertilizer with respectively a liquid formulation or a solid formulation.

Generally speaking, bio-fertilizers are, without being limited thereto, desired to be as ecological as possible not only with respect to their formulation, but also in their manufacturing and transportation. The demand for bio-fertilizers with the least ingredients is growing, and therefore improved shelf-life becomes more and more important.

First of all, there is clearly a desire to reduce spoiling and waste from the user, and accordingly, the user wants to make sure he can use the bio-fertilizer over an extended period of time, i.e. for several applications in one crop or even over several cropping seasons (or multiple plantings over several years).

Further, in bio-fertilizers, the microorganisms are the active ingredients. Micro-organisms are responsible for rendering the nutrients available to the plant. They fix the atmospheric nitrogen, solubilize the phosphorus to make it usable by the plant by their metabolic action, and thus must be living micro-organisms. It is therefore highly important for the micro-organisms to remain alive or to be able to revive and show the expected metabolic action after extended storage.

Within the meaning of the present invention, the term "Shelf-life of X months" is not only directed to formulations which are not degraded over a period of X months, but also directed to formulations in which the micro-organisms are kept alive or able to be revived after the storage during X month, i.e. able to show their metabolic action and to form colonies in an agar culture medium.

Liquid formulations can contain nutrients, special cell protectants or chemical substances that promote the formation of resting spores or cysts to increase the microorganisms' stress tolerance and stability. Liquid formulations are temperature tolerant, and some have demonstrated a shelf life of about 2 years but require high investments for production unit.

Document US20220213003 relates to biofertilizers that are readily compatible with standard fertilizers and common agricultural practices. The disclosed liquid agricultural formulations comprise living microorganisms and an elevated concentration of a chelating agent in order to increase shelf-life duration to about 2 years. According to this document, accelerated aging shelf-life test approximating storage at room temperature for 2 years leads to a 10-fold loss in viable cells compared to the first day.

According to document US 20220213003, a range of commercial biofertilizer formulations are available on the market, with different strategies having been employed to try to ensure viability of the microorganisms of the biofertilizer. These strategies include optimization of dry biofertilizer formulations and liquid biofertilizer formulations. They explain that with dry biofertilizer formulations, a carrier is used as a vehicle for the microorganisms which plays a role in maintaining the viability of the microorganisms, thereby affecting the shelf-life of the biofertilizer formulation. To date, most dry biofertilizer formulations have a shelf life of about 6 months or less.

They also report that liquid biofertilizer formulations have demonstrated greater shelf-lives of up to about 2 years. However, process costs associated with the production of a liquid biofertilizer formulation are significantly higher than with a dry formulation, but there is a need for inexpensive liquid biofertilizers having a shelf life that extends beyond a single growing season.

Document US 20220213003 also expresses that many liquid biofertilizers are immiscible in standard phosphate fertilizers and/or form a precipitate when combined with standard phosphate fertilizers (e.g., 10-34-0 liquid fertilizer). Most biofertilizers used in larger-scale agriculture are not the primary fertilizer used, and are rather a supplement to, or partial replacement of, a standard fertilizer. If the biofertilizer is not compatible with the standard fertilizer and common practices, they are unlikely to be adopted by farmers. That's the reason why the liquid formulations according to US 20220213003 should be biofertilizers that are readily compatible with standard fertilizers and common agricultural practices.

In the context of green or organic agriculture, liquid biofertilizers are on the other hand perceived as inappropriate, despite their increased shelf life. Indeed, liquid biofertilizers imply water storage and transportation to reaching their final destination which could be considered environmentally detrimental. Further, the cell protectants and the chemical substances that are used to increase the shelf-life of the biofertilizers also increase the number of ingredients which may prevent the use of the bio-fertilizer in biological agriculture or to obtain certifications like "Ecocert".

In contrast, solid formulations are typically perceived as more ecological and sustainable, since they do not involve water transportation, but typically show a reduced shelf-life. Indeed, solid formulations are dependent on the carrier that will contain the microorganisms. It has been broadly perceived that the utilization of a sterile carrier offers a few favorable features compared to nonsterile ones. Other factors influence the stability of the microorganisms in a solid formulation such as moisture, the drying speed of the microorganisms during the fabrication process, the temperature during the storage of the formulation. The longest stability of the microorganisms is obtained by a dry product containing slow dried microorganisms stored at low temperature (4°C). S. K. Barolia mentions this in his review article in the International Journal of Current Microbiology and Applied Sciences. Of course, storing a dry product at low temperature does not appear as a practical or feasible way to increase the shelf-life of a bio-fertilizer aiming to have a positive ecological impact. Accordingly, solid based formulations have the advantages of being typically cheap, easy to produce but have a lower shelf life of around 6 months.

The challenge in making a solid formulation readily available is also to ensure that it is highly soluble. Indeed, although the use of solid formulation is more advantageous in terms of transport, both in terms of volume and mass to be transported, the use of solid biofertilizer implies the need for dissolution before its application on the plants.

As it can be understood from the aforementioned, there is therefore a need for solid formulation of bio-fertilizers, which are ecological and sustainable in use and manufacturing.

Document EP31 10776 discloses solid formulations containing micro-organisms which can be used for remediation of soils or as biofertilizer. The solid fertilizer compositions comprise a cellulose nutrient component and a selection of bacteria. Unfortunately, the document is silent on the stability over time of the microorganisms and contains a series of micronutrients, macronutrients, binders, substrate and at least two species of micro-organisms, such as fungi (2 or more strains) and bacteria (5 different strains).

Document WO2015157865 discloses a solid biofertilizer comprising lignosulfonate and microorganisms to improve the growing of plants, strengthen the structure and development of the root system and shoot the plant or crop root system. Some nutrients can also be added according to this document. The preferred lignosulfonate is ammonium lignosulfonate and is typically either tetrabutylammonium lignosulfonate and/or phenyltrimethylammonium lignosulfonate.

The aforementioned solid formulations of biofertilizers are certainly promising but they still contain many different ingredients without targeting an extended shelf life.

It is an object of the invention to provide a biofertilizer with an improved stability of the microorganisms in the formulation to achieve a high shelf-life together with an environment footprint as low as possible.

To this end, the present invention provides a wettable powder soil activator composition having an extended shelf-life duration comprising:
- From 91.8 to 99.8 weight% of at least one lignosulfonate salt with respect to the total weight of the soil activator composition, preferably from 95 to 99.8 weight%,
- From 0.2 to 8.2 weight % of a bacterial mixture with respect to the total weight of the soil activator composition, said bacterial mixture containing at least 3 different bacteria species with at least one nitrogen fixing bacteria species and at least one phosphorus solubilizing bacteria species, and containing at least 263 million (2.63×10⁸) cfu total bacteria per gram soil activator composition after said extended shelf life, measured according to ASTM-D5465-93 (dated 1998) standard, preferably from 0.2 to 5 weight%,
wherein said lignosulfonate salt is at least one amongst sodium lignosulfonate, calcium lignosulfonate and wherein said extended shelf life is higher than or equal to 2 years, preferably higher than or equal to 3 years.

According to the present invention, it was surprisingly possible to achieve a solid formulation for a biofertilizer being said wettable powder soil activator composition showing an extended shelf life of at least 2 years and even up to 3 years after which the bacterial mixture still contains at least 263 million (2.63×10⁸), preferably at least 500 million (5×10⁸) cfu/g of soil activator composition and having an environmental footprint as low as possible by providing a very few amount of ingredients.

The composition according to the present invention comprises one major component which is a sodium or calcium lignosulfonate, i.e. a lignosulfonate bearing as counter ion calcium or sodium up to a level between 91.8 wt% to 99.8 wt%, preferably 95 wt% to 99.8 wt% beside the bacterial mixture. Without fully understanding why, it appears that a lignosulfonate bearing a counter ion chosen between sodium and calcium offers an environment to the bacterial mixture allowing easy revival even after three years shelf life up to a level of at least 263 million (2.63×10⁸), preferably at least 500 million (5×10⁸) cfu/g of soil activator composition, without using mandatorily a series of nutrients, cell protectants, or buffering ingredients.

Indeed, contrary to document WO2015/157865 or EP3110776, which disclose formulation containing nutrients, cell protectant or buffering ingredient like calcium bicarbonate and accordingly showing potentially a more detrimental environment footprint or creating difficulties to reach a bio-fertilizer fully compatible with organic agriculture or with ecological certifications, the present invention allows to achieve a stability over time to keep the bio-fertilizer activity without requiring additives. The composition according to the present invention has therefore an environmental footprint which is very low since lignosulfonate salts of sodium or calcium are a natural recycled by-product coming from wood pulping during paper manufacturing. They are non-toxic, non-corrosive and biodegradable, with a recognized and approved use in organic agriculture.

Said lignosulfonate salt is at least one amongst sodium lignosulfonate, calcium lignosulfonate. Lignosulfonate is an anionic biobased chemical with a heterogenous mixture of molecules with different degrees of polymerization and molecular weights. The sodium and calcium cations are counter-ions of the lignosulfonate. The sodium cation is monocharged while the calcium cation has two positive charges. The differences in charges modify the amount of counter-ions needed to obtain a neutral composition and in the interactions between counter-ions with soil, microorganism, and plants.

Said lignosulfonate acts as a mild chelator, which can help to make micronutrients more available for the plant. Indeed, the chelation of nutrients allows them to translocate within the plants better than without chelating agent.

The said wettable powder soil activator composition comprises 0.2%, preferably 0.5%, preferably 1%, preferably 2%, preferably 3%, preferably 4%, preferably 5%, preferably 6%, preferably 7%, preferably 8% of a bacterial mixture with respect to the total weight of the soil activator composition.

The bacterial mixture contains the bacteria species on a carrier and is homogeneously spread in the said at least one lignosulfonate salt. This dilution preserves the life span of the bacteria because the at least one lignosulfonate salt will act as a protective element for bacteria.

Said bacterial mixture contains at least 3 different species, with at least one species which is a nitrogen-fixing species and at least one species which is a phosphorus-solubilizing species to act at different levels for offering the required nutrient, i.e. nitrogen and phosphorus for improved growth of the plant.

The composition according to the present invention has an extended shelf life characterized by at least 263 million (2.63×10⁸) cfu total bacteria /g soil activator composition after at least 2 years and preferably after 3 years. The extended shelf-life is measured, according to the present invention, by accelerated ageing tests that consist of blending each individual bacterial species or a bacteria blend with the at least one lignosulfonate salt, storing the blend at an elevated temperature, around 40°C more particular at 43°C, during 56 days (equivalent to approximately at least 2 years at room storage conditions). The bacteria count is then monitored over time by Total Plate Counts methodology according to ASTM-D5465-93 (dated 1998) standard.

In particular, the inventors use two methods to measure the extended shelf-life of the bacteria of said wettable powder soil activator composition according to the present invention :
1) The measurement of the wettable powder soil activator composition stored in standard commercial packaging at normal ambient conditions for at least 2 years, preferably for at least 3 years.
2) The measurement of wettable powder soil activator composition by accelerated ageing tests with storage in small sealed plastic bags for 56 days at around 40°C, more particularly at 43°C.
Said measurement of bacteria is done by counting monitored over time by Total Plate Counts methodology according to ASTM-D5465-93 (dated 1998) standard.

In one preferred embodiment, in the wettable powder soil activator composition according to the present invention said one or more nitrogen fixing bacteria species is/are chosen amongst Bacillus subtilis, Bacillus licheniformis, Bacillus amyloliquefaciens, Pseudomonas monteilii.

In one other preferred embodiment, all nitrogen fixing bacteria species are chosen amongst Bacillus subtilis, Bacillus licheniformis, Bacillus amyloliquefaciens, Pseudomonas monteilii.

In one advantageous embodiment, said bacterial mixture of the wettable powder soil activator composition according to the present invention contains at least 240 million (2.4×10⁸) cfu of Bacillus subtilis/g soil activator composition after said extended shelf life, measured according to ASTM-D5465-93 (dated 1998) standard.

In another advantageous embodiment, said bacterial mixture of the wettable powder soil activator composition according to the present invention contains at least 500 million (5×10⁸), preferably at least 900 million (9×10⁸), preferably at least 3 billion (3×10⁹), preferably at least 5 billion (5×10⁹) cfu of Bacillus subtilis/g soil activator composition after said extended shelf life, measured according to ASTM-D5465-93 (dated 1998) standard.

In a preferred embodiment of the wettable powder soil activator composition according to the present invention, said bacterial mixture contains at least 5 million (5.0×10⁶) cfu of Bacillus amyloliquefaciens/g soil activator composition after said extended shelf life measured according to ASTM-D5465-93 (dated 1998) standard.

More preferably, said wettable powder soil activator composition according to the present invention contains at least 9 million (9×10⁶), preferably 30 million (3×10⁷), preferably 60 million (6×10⁷), preferably 90 million (9×10⁷), preferably 300 million (3×10⁸ preferably 500 million (5×10⁸), preferably 900 million (9×10⁸), preferably 1 billion (1×10⁹), preferably 3 billion (3×10⁹) cfu of Bacillus amyloliquefaciens/g soil activator composition after said extended shelf life, measured according to ASTM-D5465-93 (dated 1998) standard.

In a preferred embodiment of the wettable powder soil activator composition according to the present invention, said one or more phosphorus solubilizing bacteria species are chosen amongst Bacillus amyloliquefaciens, Pseudomonas monteilii or Pseudomonas putida. More preferably, in said wettable powder soil activator composition according to the present invention, said bacterial mixture contains at least 10 million (1.0×10⁷) cfu of Pseudomonas monteilii/g soil activator composition after said extended shelf life, measured according to ASTM-D5465-93 (dated 1998) standard.

In one advantageous embodiment according to the present invention, wherein the ratio of cfu of the one or more phosphorus solubilizing bacteria species/g soil activator composition to total cfu bacteria /g soil activator is at least 0.06, preferably 0.1, preferably 0.25, preferably 0.4, the cfu being measured according to ASTM-D5465-93 (dated 1998) standard.

It has been shown that for example the ratio of cfu of Pseudomonas monteilii as phosphorus solubilizing bacteria and nitrogen fixing bacteria/g soil activator composition to total cfu bacteria/g soil activator composition is very important to the growth of plant to provide enough bioavailable phosphorus and nitrogen to the plant and in good balance with the other nutrients made available by the remaining bacteria. Preferably, the ratio of Pseudomonas monteilii to the other bacteria is at least 0.04, preferably 0.25, preferably 0.33, preferably 0.5, preferably 0.6, preferably 0.79. For the best growth of the plant, it is necessary that the ratio of those nutrients is controlled, and this is obtained by the control of the ratio of these bacteria species.

In one embodiment, the wettable powder soil activator composition has a mean diameter of about 85 µm to ensure a convenient use of the composition, i.e. quickly suspended/solubilized in water, compatible with most agricultural liquid application equipment, able to be coated on other fertilizer granules but also spread as such in some applications, even if this latter application is not preferred. Preferably the wettable powder soil activator composition has a mean diameter of 85 µm +/- 20%, preferably of 85 µm +/- 10%.

In one preferred embodiment, the wettable powder soil activator composition according to the present invention comprises maximum 1 weight% of the total weight of the soil activator composition of insoluble matter, said insoluble matter having any dimension smaller than 100µm, for ensuring that the solid formulation of the soil activator when solubilized in water does not clog the nozzles or the spreading devices used to apply the diluted soil activator on the soil, for hydroponics applications, or for greenhouse applications. It is indeed preferable according to the present invention to apply the soil activator composition in a liquid form for rendering easier the application and preventing dust formation, but also because it creates better conditions to revive the bacteria strains present in the formulation.

In one particular embodiment of the wettable powder soil activator composition, the powder has a bulk density from 0.3 to 0.7 g/cm³, preferably from 0.35 to 0.55 g/cm³.

In another particular embodiment according to the present invention, the wettable powder soil activator composition comprises less than 10 weight% moisture, preferably less than 7 weight% moisture determined by weight loss on drying (LOD) upon heating at 105°C.

In another embodiment, the composition according to the present invention comprises additives. While it is preferable to keep the number of ingredients as low as possible for some ecological certifications or for keeping the environmental impact as low as possible, it is not excluded according to the present invention to have some nutrient additives or other additives for specific applications. In a particular embodiment, in the wettable powder soil activator composition according to the present invention, the additives are selected from the group: calcium-based compounds, phosphorus-based compounds, magnesium-based compounds, potassium-based compounds, nitrogen-based compounds, sulfur-based compounds.

For example, in the composition according to the present invention, nitrogen is present in an amount from 2 to 6 weight% based on the total weight of the wettable powder soil activator composition,

In another exemplary composition according to the present invention, phosphorus is present in an amount comprised between 0.15 and 0.4 equivalent P₂O₅ weight % based on the total weight of the wettable powder soil activator composition.

In yet another exemplary composition according to the present invention, potassium is present in an amount between 0.15 and 0.4 equivalent K₂O weight % based on the total weight of the wettable powder soil activator composition.

In another exemplary composition according to the present invention, sulfur is present in an amount comprised between 2 to 8 weight % based on the total weight of the wettable powder soil activator.

In still another exemplary composition according to the present invention, calcium is present between 0.1 and 0.2 equivalent CaO weight % based on the total weight of the wettable powder soil activator.

In one other exemplary composition according to the present invention, magnesium is present in an amount comprised between 0.05 and 0.1 equivalent MgO weight % based on the total weight of the wettable powder soil activator composition.

In a specific embodiment of the composition according to the present invention, nitrogen is present in an amount from 2 to 6 weight% based on the total weight of the wettable powder soil activator composition, phosphorus is present in an amount comprised between 0.15 and 0.4 equivalent P₂O₅ weight % based on the total weight of the wettable powder soil activator composition, potassium is present in an amount between 0.15 and 0.4 equivalent K₂O weight % based on the total weight of the wettable powder soil activator composition, sulfur is present in an amount comprised between 2 to 8 weight % based on the total weight of the wettable powder soil activator, calcium is present between 0.1 and 0.2 equivalent CaO weight % based on the total weight of the wettable powder soil activator and magnesium is present in an amount comprised between 0.05 and 0.1 equivalent MgO weight % based on the total weight of the wettable powder soil activator composition.

In one particular embodiment of the wettable powder soil activator composition, the powder has an additional biofungicide activity. It helps to control certain diseases.

In certain embodiment, the disease that is controlled by said wettable powder soil activator is selected from the list : Phytophthora infestans, Alternaria solani, Fusarium oxysporum lycopersici, Botrytis cinerea, Sclérotinia, Phoma du colza (Leptosphaeria maculans), Microdochium nivale, Verticillium dahlia, Mycosphaerella fijiensis.

Advantageously, said wettable powder soil activator composition according to the present invention, having an extended shelf-life duration comprises :
- From 91.8 to 99.8 weight% of at least one lignosulfonate salt with respect to the total weight of the soil activator composition, preferably from 95 to 99.8 weight%,
- From 0.2 to 8.2 weight % of a bacterial mixture with respect to the total weight of the soil activator composition, said bacterial mixture containing at least 3 different bacteria species with at least one nitrogen fixing bacteria species and at least one phosphorus solubilizing bacteria species, and containing at least 10 billion (1.0×10¹⁰) cfu total bacteria per gram soil activator composition after said extended shelf life, measured according to ASTM-D5465-93 (dated 1998) standard, preferably from 0.2 to 5 weight%,
wherein said lignosulfonate salt is at least one amongst sodium lignosulfonate, calcium lignosulfonate and wherein said extended shelf life is higher than or equal to 2 years, preferably higher than or equal to 3 years.

More particularly, said bacterial mixture contains at least 11 billion (1.1×10¹⁰), preferably at least 12 billion (1.2×10¹⁰), preferably at least 13 billion (1.3×10¹⁰), preferably at least 14 billion (1.4×10¹⁰), preferably at least 15 billion (1.5×10¹⁰), preferably at least 16 billion (1.6×10¹⁰), preferably at least 17 billion (1.7×10¹⁰), preferably at least 18 billion (1.8 10¹⁰), preferably at least 19 billion (1.9×10¹⁰), preferably at least 20 billion (2.0×10¹⁰), preferably at least 25 billion (2.5×10¹⁰) cfu total bacteria per gram soil activator composition after said extended shelf life.

More particularly, said bacterial mixture comprise at least 18 billion (1.8×10¹⁰) cfu of Bacillus subtilis/g soil activator composition, more particular at least 19 billion (1.9x10¹⁰) cfu of Bacillus subtilis/g soil activator composition, even more particular at least 20 billion (2.0×10¹⁰), preferably at least 25 billion (2.5×10¹⁰) cfu of Bacillus subtilis/g soil activator composition.

More particularly, said bacteria mixture comprise at least 300 million (3.0×10⁸) cfu of Bacillus amyloliquefaciens/g soil activator composition, more preferably at least 350 million (3.5×10⁸) cfu of Bacillus amyloliquefaciens/g soil activator composition, even more preferably at least 400 million (4.0×10⁸) cfu of Bacillus amyloliquefaciens/g soil activator composition, in particular at least 425 million (4.25×10⁸), preferably at least 450 million (4.5×10⁸), in particular at least 500 million (5.0×10⁸) cfu of Bacillus amyloliquefaciens/g soil activator composition.

More particularly, said bacteria mixture comprise at least 30 million (3.0×10⁷) cfu of Pseudomonas monteilii/g soil activator composition, more particular at least 35 million (3.5×10⁷) cfu of Pseudomonas monteilii/g soil activator composition, even more particular at least 40 million (4.0×10⁷) cfu of Pseudomonas monteilii/g soil activator composition, advantageously at least 42.5 million (4.25×10⁷), preferably at least 45 million (4.5×10⁷), in particular at least 50 million (5.0×10⁷), preferably at least 100 million (1.0×10⁸) cfu of Pseudomonas monteilii/g soil activator composition.

Other embodiments of the wettable powder soil activator composition according to the present invention are mentioned in the appended claims and the subsequent description of an embodiment of the invention.

The present invention also relates to a fertilizer containing said wettable powder soil activator and at least one nutrient. By example, the nutrient can be selected from the group nitrogen, phosphorus, potassium, calcium, magnesium, sulfur, or combinations of these compounds.

The present invention also relates to a use of a wettable powder soil activator composition according to the invention as a biofungicide.

The present invention also relates to a method for preparing a wettable powder soil activator composition according to any of the preceding claims, comprising the following steps:
- Preparing a bacterial mixture with lyophilized bacteria on a conventional carrier such as maltodextrin by dosing the one or more nitrogen fixing bacteria species to reach at least 2.55 billion (2.55×10⁹) cfu nitrogen fixing bacteria/g soil activator composition, measured according to ASTM-D5465-93 (dated 1998) standard and the one or more phosphorus solubilizing bacteria species to reach at least 2 billion (2×10⁹) cfu of phosphorus solubilizing bacteria/g soil activator composition measured according to ASTM-D5465-93 (dated 1998) standard, and
- Mixing said bacterial mixture with a lignosulfonate salt chosen amongst sodium lignosulfonate or calcium lignosulfonate to obtain a wettable powder soil activator composition.

As it can be seen, in the method according to the present invention, the bacterial mixture is prepared with a high count of bacteria to ensure the minimal cfu is still achieved after extended shelf life while not diluting the sulfonate content and not requiring the addition of aids or mandatory additives to obtain a stable wettable powder soil activator composition.

Accordingly, the method according to the present invention is very simple and allows to reach an ecological formulation with a low environmental footprint.

Other embodiments of the method according to the present invention are mentioned in the appended claims and the subsequent description of an embodiment of the invention.

Other characteristics and advantages of the present invention will be derived from the non-limitative following description, and by making reference to the drawings and the examples.

### Example 1.-

A wettable powder soil activator composition was prepared by measuring the necessary quantities of high-count Bacillus subtilis, Bacillus amyloliquefaciens, and Pseudomonas monteilii powders to achieve each of their target counts in the finished formula (1.25 billion cfu/g, 25 million cfu/g, and 400 million cfu/g, respectively (1.25×10⁹ cfu/g, 2.5×10⁷ cfu/g, and 4.0×10⁸ cfu/g, respectively)). The three powders were combined to form a bacterial mixture having a weight of 2.12 grams.

The bacterial mixture was added to 997.88 grams of sodium lignosulfonate and mixed until a homogeneous wettable powder composition of one kilogram was achieved.

The actual ratios of the three species at the time of manufacturing include more Pseudomonas to make sure that the product does not lose its balance during its 3-year shelf life, because that species has a shorter shelf life than the other two.

The count of bacteria (cfu) after three years of storage is above 2.48×10⁸ cfu Bacillus subtilis per gram of solid soil activator composition, above 5.0×10⁶ cfu Bacillus amyloliquefaciens per gram of solid soil activator composition and 1.0×10⁷ cfu Pseudomonas monteilii per gram of solid soil activator composition.

At the time of production, the count of bacteria in cfu was performed by using two methodologies:
1: Total Plate Count. This quantifies the total number of viable bacteria in the product but cannot separate the different species. The measurement was performed according to ASTM-D5465-93 (dated 1998) standard.
2: qPCR. This is a genetic test based on the amount of unique DNA in the sample from the three species, so it can quantify the levels of each species separately. However, it does not differentiate between living and non-living bacteria. The test was performed according to the ASTM D8412-21 standard Standard Guide for Quantification of Microbial Contamination in Liquid Fuels and Fuel-Associated Water by Quantitative Polymerase Chain Reaction (qPCR).

### EXAMPLE 2.- Coated granulated fertilizer with the wettable powder soil activator composition

A co-formulation of said wettable powder soil activator composition and two different granular chemical fertilizers, one containing a blend of nitrogen, phosphorus, and sulfur (NPS) and the other containing nitrogen, phosphorus, and potassium (NPK), was made to evaluate its stability.

Ninety-eight grams of each fertilizer were weighed out in triplicate and mixed with two grams of said wettable powder soil activator composition so that the final mix was 2% of said wettable powder soil activator composition. The blends were thoroughly mixed and then shaken on a 250 µm screen to allow the removal of any of said wettable powder soil activator composition that did not adhere to the fertilizer. As control, each fertilizer alone was shaken on the screen.

The average amount of said wettable powder soil activator screened out of the NPS fertilizer blend was 1.42g (71%) meaning that 29% of the said wettable powder soil activator adhered to the fertilizer (Table 1). The average amount of said wettable powder soil activator screened out of the NPK fertilizer blend was 1.91g (95.5%) meaning that 4.5% of the said wettable powder soil activator adhered to the fertilizer (Table 1). Nothing was recovered from the controls (data not shown), indicating that the screenings did not included dust from the fertilizers themselves.

**Table 1: Amount of Soil Activator recovered from the NPS and NPK blends after being shaken through a 250µm screen. Two grams of Soil Activator was added to each replicate.**

| | **Soil Activator Recovered (g)** | **% Recovered** | **% Adhered** | **Average % Recovery** | **Average % Adherence** |
|---|---|---|---|---|---|
| NPS blend 1 | 1.4 | 70 | 30 | 71 | 29 |
| NPS blend 2 | 1.46 | 73 | 27 | | |
| NPS blend 3 | 1.4 | 70 | 30 | | |
| NPK blend 1 | 1.93 | 96.5 | 3.5 | 95.5 | 4.5 |
| NPK blend 2 | 1.9 | 95 | 5 | | |
| NPK blend 3 | 1.89 | 94.5 | 5.5 | | |

### EXAMPLE 3.- Storage of wettable powder soil activator composition at elevated temperature ("accelerated shelf life test")

One soil activator composition was prepared using three bacteria strains : Bacillus subtilis, Bacillus amyloliquefaciens, and Pseudomonas monteilii.

The bacteria were blended with dry powdered sodium lignosulfonate to obtain said soil activator composition according to the present invention, then stored in sealed plastic bags at 43°C.

Subsamples were removed periodically to measure the total quantity of bacteria using the total plate count method (ASTM-D5465-93, dated 1998). The final measurement was made after storage for 56 days, equivalent to 3 years.

The results of the total plate counts on each date were transformed using the log₁₀ and then standardized on each date by calculating the percentage of the original counts on day 0. These values were plotted to identify the evolution of the quantity of viable cells in said soil activator composition over time.

The soil activator composition according to the present invention had a starting bacteria count of 3.55×10⁸ cfu/g. The counts on each date are presented in the following table:

**Table 1: Total Plate Counts of soil activator composition stored at 43° Celsius: "SLS" was a soil activator formulated with sodium lignosulfonate. The table includes the Log₁₀ transformations of the bacteria counts, and the calculation of the percentage of initial counts on each measurement date.**

| | | **Day** | | | | |
|---|---|---|---|---|---|---|
| | | *0* | *7* | *14* | *28* | *56* |
| **SLS** | *Counts (CFU*/*g)* | 3.55×10^8 | 2.88×10^8 | 2.70×10^8 | 3.80×10^8 | 1.07×10^9 |
| | *Log₁₀* | 8.55 | 8.46 | 8.43 | 8.58 | 9.03 |
| | *% of initial* | 100% | 99% | 99% | 100% | 106% |

The bacteria counts in the soil activator composition with sodium lignosulfonate according to the present invention remained near 100% for the duration of the test, indicating that sodium lignosulfonate provides extended shelf-life and stability to the bacteria.

It should be understood that the present invention is not limited to the described embodiments and that variations can be applied without going outside of the scope of the claims.

For example, the number of cfu was measured typically according to ASTM-D5465-93 (dated 1998) standard but it is also foreseen to measure the number of cfu viable bacteria is measured by the methodology of quantitative real-time polymerase chain reaction (qPCR)performed according to the ASTM D8412-21 standard - Standard Guide for Quantification of Microbial Contamination in Liquid Fuels and Fuel-Associated Water by Quantitative Polymerase Chain Reaction (qPCR).

### EXAMPLE 4.- Storage of wettable powder soil activator composition at room temperature for 3 years

One soil activator composition was prepared using three bacteria strains : Bacillus subtilis, Bacillus amyloliquefaciens, and Pseudomonas monteilii.

The bacteria were blended with dry powdered sodium lignosulfonate to obtain said soil activator composition according to the present invention, then stored in sealed plastic bags at room temperature for 3 years and was tested using qPCR analysis.

This is a genetic test based on the amount of unique DNA in the sample from the three species, so it can quantify the levels of each species separately. The test was performed according to the ASTM D8412-21 standard Standard Guide for Quantification of Microbial Contamination in Liquid Fuels and Fuel-Associated Water by Quantitative Polymerase Chain Reaction (qPCR). The results of this analysis were compared to the results of Total Plate Count method testing performed on the same lot after the production.

The Soil Activator composition according to the present invention has been tested after the production by a third party lab using the Total Plate Count methodology, with a result of 5.9×10⁸ cfu/g.

After 3 years of storage at room temperature, a sample was taken from said Soil Activator composition according to the invention. The sample was analysed by a third-party lab using the qPCR method. Based on this methodology, it has been found a total of 1.88×10⁹ cfu/g in the sample.

Thus, it has been concluded that the bacterial mixture and more specifically the bacteria Bacillus subtilis, Bacillus amyloliquefaciens and Pseudomonas monteilii was still present in the Soil Activator at the specified levels after 3 years of storage, moreover it indicates that sodium lignosulfonate provides extended shelf-life and stability to the bacteria.

## Claims

1. Wettable powder soil activator composition having an extended shelf-life duration comprising:
- From 91.8 to 99.8 weight% of at least one lignosulfonate salt with respect to the total weight of the soil activator composition, preferably from 95 to 99.8 weight%,
- From 0.2 to 8.2 weight % of a bacterial mixture with respect to the total weight of the soil activator composition, said bacterial mixture containing at least 3 different bacteria species with one or more nitrogen fixing bacteria species and one or more phosphorus solubilizing bacteria species, and containing at least 263 million (2.63×10⁸) cfu total bacteria /g soil activator composition after said extended shelf life measured according to ASTM-D5465-93 (dated 1998) standard, preferably from 0.2 to 5 weight%,
wherein said lignosulfonate salt is at least one amongst sodium lignosulfonate, calcium lignosulfonate and wherein said extended shelf life is higher than or equal to 2 years, preferably higher than or equal to 3 years.

2. Wettable powder soil activator composition according to claim 1, wherein said one or more nitrogen fixing bacteria species is/are chosen amongst Bacillus subtilis, Bacillus licheniformis, Bacillus amyloliquefaciens, Pseudomonas monteilii.

3. Wettable powder soil activator composition according to claim 1 or 2, wherein said bacterial mixture contains at least 240 million (2.4×10⁸) cfu of Bacillus subtilis/g soil activator composition after said extended shelf life, measured according to ASTM-D5465-93 (dated 1998) standard.

4. Wettable powder soil activator composition according to any of the preceding claims wherein said bacterial mixture contains at least 5 million (5.0×10⁶) cfu of Bacillus amyloliquefaciens/g soil activator composition after said extended shelf life measured according to ASTM-D5465-93 (dated 1998) standard.

5. Wettable powder soil activator composition according to any of the preceding claims wherein said one or more phosphorus solubilizing bacteria species are chosen amongst Bacillus amyloliquefaciens, Pseudomonas monteilii or Pseudomonas putida.

6. Wettable powder soil activator composition according to any of the preceding claims, wherein said bacterial mixture contains at least 10 million (1.0×10⁷) cfu of Pseudomonas monteilii/g soil activator composition after said extended shelf life, measured according to ASTM-D5465-93 (dated 1998) standard.

7. Wettable powder soil activator composition according to any of the preceding claims, wherein the ratio of cfu of the one or more phosphorus solubilizing bacteria species/g soil activator composition to total cfu bacteria /g soil activator is at least 0.06, preferably 0.1, preferably 0.25, preferably 0.6 measured according to ASTM-D5465-93 (dated 1998) standard.

8. Wettable powder soil activator composition according to any of the preceding claims, having a mean diameter of about 85 µm.

9. Wettable powder soil activator composition according to any of the preceding claims, comprising maximum 1 weight% of the total weight of the soil activator composition of insoluble matter, said insoluble matter having any dimension smaller than 100µm.

10. Wettable powder soil activator composition according to any of the preceding claims, having a bulk density from 0.3 to 0.7 g/cm³, preferably from 0.35 to 0.55 g/cm³.

11. Wettable powder soil activator composition according to any of the preceding claims, comprising less than 10 weight% moisture, preferably less than 7 weight% moisture determined by weight loss on drying (LOD) upon heating at 105°C.

12. Wettable powder soil activator composition according to any of the preceding claims, comprising additives.

13. Wettable powder soil activator composition according to claim 12, wherein the additives are selected from the group: calcium-based compounds, such as CaO, phosphorus-based compounds, such as P₂O₅, magnesium-based compounds, such as MgO, potassium-based compounds, such as K₂O, nitrogen-based compounds, such as NH₄⁺, sulphur-based compounds, such as SO₄²⁻.

14. Wettable powder soil activator composition according to claim 13, wherein nitrogen is present in an amount from 2 to 6 weight% based on the total weight of the wettable powder soil activator composition, phosphorus is present in an amount comprised between 0.15 and 0.4 equivalent P₂O₅ weight % based on the total weight of the wettable powder soil activator composition, potassium is present in an amount between 0.15 and 0.4 equivalent K₂O weight % based on the total weight of the wettable powder soil activator composition, sulfur is present in an amount comprised between 2 to 8 weight % based on the total weight of the wettable powder soil activator, calcium is present between 0.1 and 0.2 equivalent CaO weight % based on the total weight of the wettable powder soil activator and magnesium is present in an amount comprised between 0.05 and 0.1 equivalent MgO weight % based on the total weight of the wettable powder soil activator composition.

15. Wettable powder soil activator composition according to any of the preceding claims having a biofungicide activity.

16. Fertilizer granules coated with said wettable powder soil activator according to any of the preceding claims.

17. Fertilizer containing said wettable powder soil activator according to any of the claims 1 to 15 and at least one nutrient.

18. Use of said wettable powder soil activator according to any of the claims 1 to 15 as a biofungicide.

19. Method for preparing a wettable powder soil activator composition according to any of the claims 1 to 15, comprising the following steps:
- Preparing a bacterial mixture with lyophilized bacteria on a carrier chosen amongst by dosing the one or more nitrogen fixing bacteria species to reach at least 2.55 billion (2.55×10⁹) cfu nitrogen fixing bacteria/g soil activator composition, measured according to ASTM-D5465-93 (dated 1998) standard and the one or more phosphorus solubilizing bacteria species to reach at least 2 billion (2×10⁹) cfu of phosphorus solubilizing bacteria /g soil activator composition measured according to ASTM-D5465-93 (dated 1998) standard, and
- Mixing said bacterial mixture with a lignosulfonate salt chosen amongst sodium lignosulfonate or calcium lignosulfonate.
